# EUROPEAN PATENT SPECIFICATION

(11) **EP 0 266 763 B1**
(45) Date of publication and mention of the grant of the patent: **23.06.1993**
(21) Application number: 87116284.8
(22) Date of filing: 05.11.1987
(51) Int. Cl.: C03B 37/025

(54) **Methods of and apparatus for adjusting the configuration of optical substrates**
Vorrichtung und Verfahren zur Regulierung der Struktur optischer Substrate
Procédé et dispositif pour l'ajustement de la configuration de substrats optiques

(30) Priority: 07.11.1986 US 928436
(43) Date of publication of application: 11.05.1988
(73) Proprietor: AT&T Corp., New York, NY 10013-2412 (US)
(72) Inventor: Baltzer, Gary Lew, Norcross Georgia 30092 (US); Lynch, Brian, Norcross Georgia 30093 (US); O'Brien, William Donald, Jr., Lilburn Georgia 30247 (US)
(74) Representative: Blumbach Weser Bergen Kramer

(56) References cited:
- WO-A-80/02020
- WO-A-84/00029
- US-A- 4 217 027
- US-A- 4 276 243
- US-A- 4 278 459
- US-A- 4 477 244
- US-A- 4 486 214

## Description

### Technical Field

The invention relates to a method for configuring and adjusting an elongated glass substrate comprising the features a) through d) of the preamble to claim 1 and to an apparatus for configuring and adjusting such substrate comprising the features a) through d), d.1), d.2) of the preamble to claim 7.

### Background of the Invention

Increased demand for optical fiber has prompted efforts to increase the productivity of the well known modified chemical vapor deposition (MCVD) process (US-A-4,217,027). However, the MCVD process rate is limited by the thickness of the wall of a substrate tube in which deposition is caused to occur. To obtain optical fiber having optimal geometrical and optical characteristics, the preform must have a core-to-cladding mass ratio within specified limits. Increasing the mass of the substrate tube to obtain a larger preform requires that the wall of the substrate tube be made thicker. However, increasing the thickness of the wall of the substrate tube recudes the rate of heat transfer to the reactant-containing gases, thereby increasing the time required to deposit each layer of glass particulates. If the wall of the substrate tube is too thick, then insufficient heat transfer may occur, which may result in the formation of bubbles or incomplete sintering.

One way in which the productivity of the MCVD process can be increased is first to produce an undercladded preform, having a larger than desired core-to-cladding mass ratio. This preform is inserted into a glass tube which is referred to as an overcladding tube and which is then collapsed onto the preform. This is referred to as the rod and tube technique. It is desirable that any added eccentricity of material about the preform core due to overcladding should be minimized.

If the undercladded preform or rod is not substantially straight, difficulties are encountered when it is inserted into the overcladding tube. This also may lead to problems when the tube is collapsed on the rod. Contact of the rod with the inside surface of the tube has not been found to be detrimental for present proof test levels of interest. However, radial misalignment between the overcladding tube and the undercladded preform should be minimized, otherwise the resultant drawn fiber core may be too eccentric which inhibits proper splicing of the drawn fiber to another.

Optical fiber preform tube straightening is not new. US-A-4,477,273 = WO-A-84/00029 show methods and apparatus for straightening and configuring an optical preform tube according to the preamble of claims 1 and 7, respecitvely.

What is needed and what does not appear to be available in the prior art are automatic methods and apparatus for causing a preform rod to be substantially straight so that it is suitable for trouble-free insertion into a tube in a rod and tube process. The sought-after methods and apparatus desirably should be adapteable to existing apparatus and be controllable for a variety of conditions.

### Summary of Invention

The foregoing problems of the prior art have been overcome by the method of claim 1 and the apparatus of claim 8.

An elongated substrate which is made of a glass material and which is to be used as a source for an optical fiber is supported and rotated about an axis of rotation which extends through end portions of the substrate. Force-applying means is incrementally moved toward the substrate while it is being continuously moved in a direction along the axis of rotation and while the substrate is being rotated. A sensing signal is provided which indicates whether the substrate and the force-applying means engage each other (positive signal) or are clear from one another (negative signal). When the force-applying means has remained in engagement continuously with a predetermined portion of the periphery of the rotating substrate, a control signal is produced for discontinuing the incremental movement of the force-applying means toward the axis of rotation.

Should the substrate not be circular, or should its cross section be offset from the axis of rotation, then as it rotates, a peripheral portion of it will be spaced more closely to the axis of rotation. When this peripheral portion is adjacent to the force-applying means, disengagement of the force-applying means and the substrate is detected (negative signal) and the force-applying means are allowed to be moved further incrementally toward the rotational axis.

Each successive section of the substrate is determined to be acceptable when the generation of the positive sensing signal is maintained for a predetermined time which equates to the continuous engagement of the force-applying means with a predetermined portion of the periphery of the substrate as the substrate is being rotated. As a result of this process, the substrate is caused to have a longitudinal axis which is substantially straight along its length and which is substantially conincident with the axis of rotation and a substantially circular cross section which is disposed concentrically about the longitudinal axis.

The apparatus for causing the substrate of optical quality glass material to be substantially straight and substantially circular includes means for suspending and rotating the substrate about an axis of rotation through end portions of the substrate and means for applying forces to each successive section of length of the substrate The force-applying means is supported by transverse moving means so that it can be moved incrmentally upwardly toward the axis of rotation of the substrate. Furthermore, it is normally biased upwardly for a sensing distance. Also longitudinal moving means cause the force-applying means to be moved in a direction along the axis of rotation while it is being moved incrementally toward the axis of rotation. Sensing means is normally in a position to indicate disengagement of substrate and force-applying means, i.e. produce the negative signal.

In operation, the force-applying means is moved incrementally toward the axis of rotation of the substrate until a peripheral portion of the rotating substrate and the force-applying means are in engagement with each other. This causes the sensing means to generate a positive sensing signal which is delivered to control means which is operably connected to the force-applying means. The positive signal continues as long as the force-applying means is held in suitable engagement with the substrate. During rotation, if any portion of the circumference of a length of the substrate is oval-shaped or if the cross-section of the substrate is offset from the axis of rotation, the force-applying means may become disengaged from the substrate, i.e. is allowed to move upwardly for the sensing distance. This causes the sensing means to produce negative sensing signals. Each portion of length of the substrate is determined to be acceptably straight and circular when the generation of positive signals continues for at least a predetermined time. When this condition is met, the control means discontinue the incremental movement of the force-applying means toward the axis of rotation. The predetermined time is chosen to equate to the engagement of the force-applying means with the substrate for a predetermined portion of the periphery of the substrate during each excursion of the force-applying means toward the substrate.

In a preferred embodiment the methods and apparatus of this invention are used to straighten and to configure an optical quality glass preform rod after deposition of glass-forming materials has occurred inside a tube and after the tube has been collapsed into the rod. However, the methods and apparatus may be used in other ways, such as for example, during the entire collapse mode. In this way, in each pass during collapse, the straightness and circularity of the resulting preform rod is controlled.
FIG. 1 is a perspective view of an apparatus for providing an optical preform rod and for carrying out the principles of the methods of this invention;
FIG. 2 is a view of a portion of a torch assembly, a portion of a straightening and configuring device and a temperature profile across a zone of heat which is caused to traverse a preform rod;
FIG. 3 is an elevational view of a portion of the apparatus of FIG. 1 which is used to reconfigure an optical preform rod;
FIG. 4 is a schematic view of a preform rod of one configuration during reconfiguring with a straightening and configuring device in the form of a roller;
FIG. 5 is an end view of the prefom rod of FIG.4 as it is being rotated;
FIG. 6 is a schematic view of a preform rod having an expected amount of offset during reconfiguring with the roller;
FIG. 7 is an end view of the preform rod of FIG. 7 as it is being rotated;
FIG. 8 is a schematic view of still another preform rod having a substantial offset;
FIGS. 9A, 9B and 9C are end views of the rod of FIG. 8 at different locations along its length;
FIG. 10 is an exaggerated side elevational view of the roller in engagement with a portion of a preform rod having a substantial offset;
FIGS. 11 and 12 are end views of a preform rod having an oval-shaped configuration and of the preform rod after it has been adjusted by apparatus of this invention; and
FIG. 13 is a view of a preform rod, the configuration of which has been adjusted in accordance with the methods and apparatus of this invention, inserted into an overcladding tube.

### Detailed Description

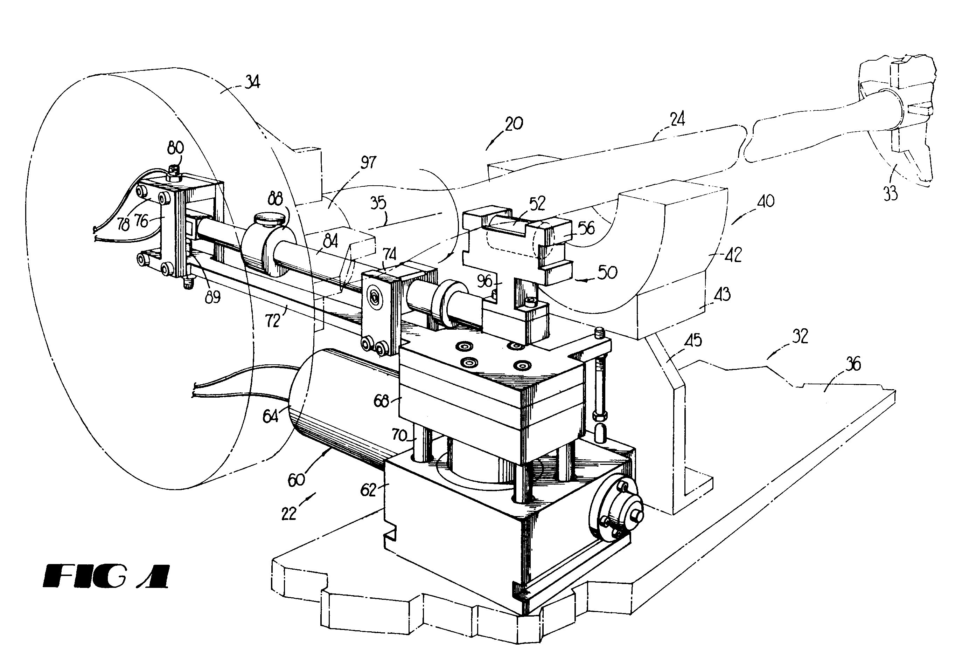

Referring now to FIG. 1, there is shown an apparatus 20 which includes straightening and configuring apparatus 22 which is used to cause an elongated glass substrate such as a preform rod 24 having particular optical properties to have predetermined geometrical characteristics. Those characteristics are that it will have a substantially straight longitudinal axis, and a transverse cross section at each point along the longitudinal axis which is substantially circular and which is disposed concentrically about the longitudinal axis.

The apparatus 20 also includes apparatus for heating a glass substrate tube (not shown) to provide the glass preform rod 24 from which are drawn lightguide fibers. See priorly identified U.S. patent 4,217,027. The heating of the glass tube is carried out while gas phase reactants are delivered to the tube. See U.S. Pat. No. 4,276,243.

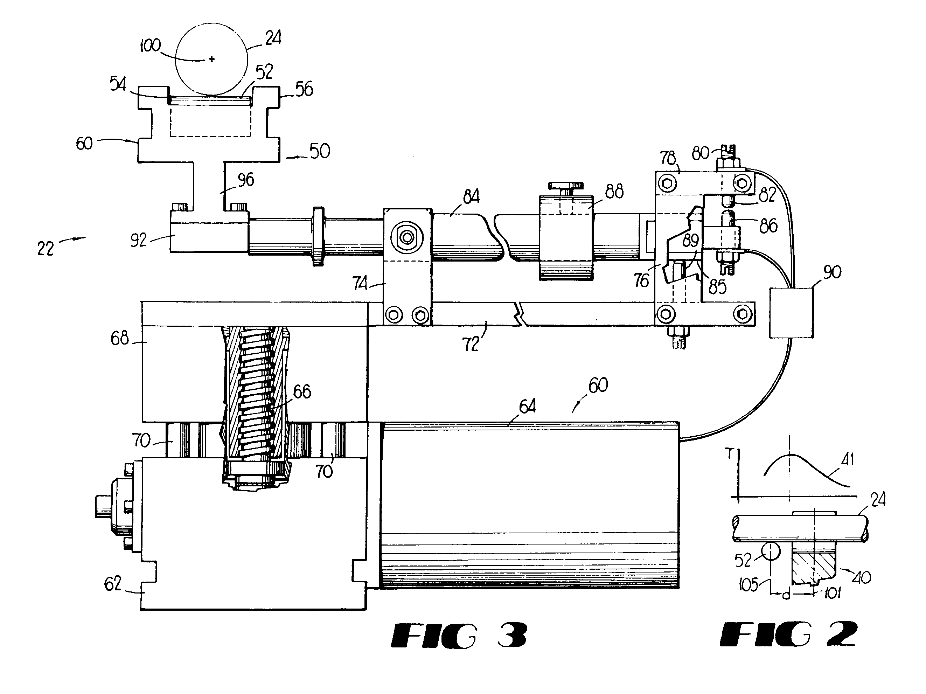

The apparatus 20 generally includes a lathe 32 having a headstock 33 and a tailstock 34 which are used to support rotatably end portions of a glass starting tube for rotation about an axis 35 which extends through spindles (not shown) of the lathe. End portions of the glass tube are held in the spindles of the lathe 32. The lathe 32 also includes a carriage 36 which is mounted for reciprocal movement along the lathe between the headstock 33 and the tailstock 34. Mounted on the carriage 36 is a torch assembly 40, and the straightening and configuring apparatus 22. The torch assembly 40 is adapted to cause a flow of combustible gases to produce flames which are directed toward the glass tube. By confining the heat from the burning gases to a desired surface area of the tube, the torch assembly 40 establishes a zone of heat 41 (see FIG. 2) having a temperature profile at the surface of the tube. The mounting of the torch assembly 40 on the carriage 36 and its movement relative to the glass tube causes the zone of heat to be moved along the length of the tube.

Torch assemblies suitable for this use are shown in U.S. patent 4,231,777 and 4,477,244. The torch assembly 40 includes a housing 42 supported by a bracket 43 which is supported from a post 45 that is mounted on the carriage 36.

The mounting of the torch assembly 40 for movement relative to the centerline of the lathe 32 which extends between the headstock 33 and the tailstock 34 provides for a predetermined confinement of the substrate tube. The confinement of the tube is of help in the control of the temperature profile along successive portions of the glass tube as the torch assembly is moved reciprocally along the rotating tube during a deposition mode.

After the substrate tube has experienced the deposition mode, it is collapsed into a solid rod. This may be accomplished by reducing the rotational speed from about 75 rpm to about 20 rpm and by increasing the temperature of the hot zone to about 1800°C. For one-half of the collapse mode, each pass is from right to left as viewed in FIG. 1. Then the tube is pinched off near the tailstock 34 and additional collapse passes from left to right are used.

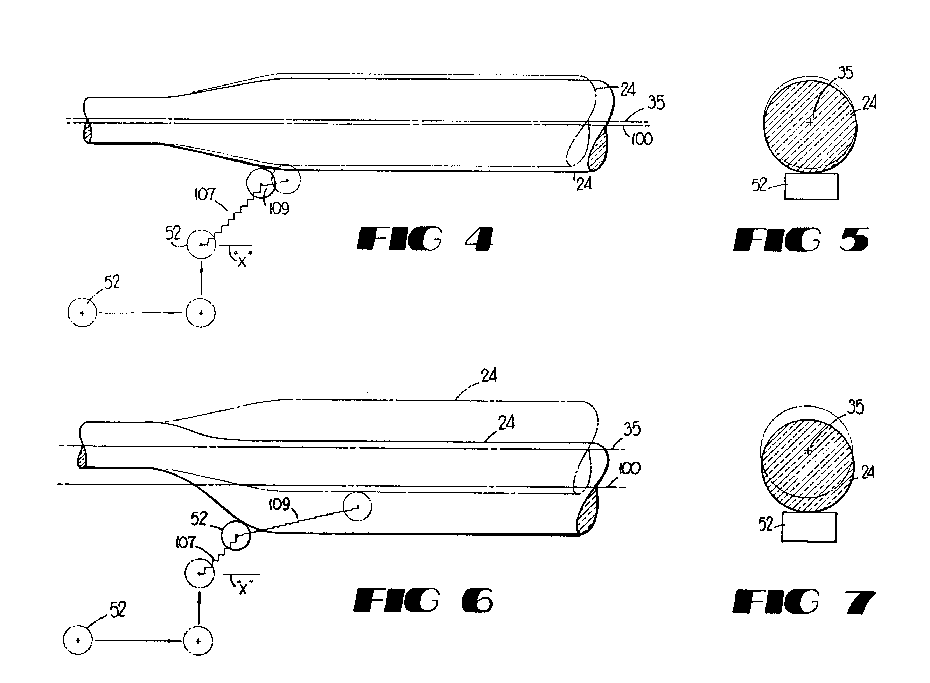

Going now to the preform tube straightening and configuring apparatus 22, it is seen from FIGS. 1 and 3 that a force-applying means in the form of a contact device 50 is positioned adjacent to the torch assembly 40. In a preferred embodiment, the contact device 50 includes a roller 52 which is made of graphite. The roller 52 is mounted in a fixed position in bearings 54-54 that are supported in a housing 56. The contact device may take other forms such as for example, a metallic tube. Advantageously, the roller may be turned in the bearings to other orientations after wear occurs in any one position.

The roller 52 is mounted in an apparatus designated generally by the numeral 60 which is supported on the lathe carriage. As can best be seen in FIG. 3, the apparatus includes a 90 gearbox 62 which is driven bu a stepper motor 64. Extending from the gearbox 62 is a drive screw 66 which has an upper end that mates with an internally threaded screw member mounted in a platform 68. Movement of the platform 68 is guided by four rods 70-70 which are connected to an underside of the platform 68 and which are mounted for reciprocal movement within bores in the gearbox.

Attached to the platform 68 is a cantilevered base 72 havng a fulcrum 74 attached thereto and a U-shaped end portion 76. Mounted in an upper portion 78 of the U-shaped end portion 76 of the base and insulated therefrom is a first electrical contact 80. The electrical contact 80 includes a depending portion 82 which extends toward the cantilevered base 72.

Mounted pivotally on the fulcrum 74 is an arm 84. At one end portion 85 of the arm 84 is mounted a second electrical contact 86 which extends toward the first electrical contact 80 and which is insulated from the arm 84. The upper end of the second electrical contact 86 is spaced about 0.018 cm from the lower end of the upper contact 80.

A counterweight 88 is adjustably positioned on the arm 84 between the fulcrum 74 and the second electrical contact 86. In a preferred embodiment, the distance from the end of the end portion 85 of the arm to the center of the fulcrum is about twice the distance from the center of the fulcrum to the opposite end of the arm. The counterweight 88 causes the end portion 85 of the arm to be biased normally in a downward direction as viewed in FIG. 3. Downward movement of the end portion of the arm 84 is controlled by an adjustable stop 89 having an upper end which engages an underside of the arm 84.

At an opposite end portion 92 of the arm 84 is mounted a cradle 96. The cradle 96 is adapted to support rotatably the housing 56 in which is mounted the roller 52. As seen in FIG. 3, the cradle 96 is positioned on the arm 84 so that a transverse centerline of the roller is aligned with a longitudinal axis 100 of the preform rod 24 which is supported between the headstock 33 and the tailstock 34 of the lathe 32. The counterweight 88 causes the roller 52 to be biased upwardly as viewd in FIG. 3. It will be recalled that the end portions of the preform rod 24 are held in spindles of the lathe 32 with axes of rotation of the spindles being aligned with each other.

Generally, the operation of the apparatus 22 is such that the platform 68 is caused to be moved upwardly as seen in FIG. 3 to elevate the roller 52. When the roller 52 engages the preform rod 24, the arm 82 is caused to be turned in a counterclockwise direction as viewed in FIG. 3. This causes the second electrical contact 86 to be moved upwardly to engage the depending portion 82 of the first electrical contact 80 and complete an electrical circuit (not shown) which controls the stepper motor. Because of the location of the fulcrum 74 along the arm, a downward movement of the roller 52 of only about 0.005 cm - 0.008 cm will cause the second electrical contact to move upwardly through the 0.018 cm gap and engage the first elecrtrical contact 80.

The electrical contacts 80 and 86 perform a dual function. Not only does their touching each other complete an electrical circuit, but they also cooperate to provide a stop which is effective to discontinue the upward movement of the end portion 85 of the arm 84.

The electrical contacts 80 and 86 are connected to a programmable controller 90 which is connected to the stepper motor. The controller 90 causes the platform 68 to be moved upwardly incrementally, and, responsive to the closing of the electrical contacts for a predetermined time, causes the upward movement to be discontinued.

In a preferred embodiment, the straightening and configuring portion 22 of the apparatus 20 includes facilities for causing the surface that engages the preform rod 24 to have a temperature that is substantially below that of the preform rod. The housing 56 is adapted to hold a coolant such as deionized water which may be suplied by conduits (not shown) within the arm and cradle. The water is applied over the surface of the roller 52 to clean the surface thereof which engages the tube and to prevent the roller from adhering to the preform rod. The water overflows the sideplates and falls into a drain pan below (not shown). Also, the water forms an interface between the roller 52 and the rod which functions as a cushion to prevent damage to the surface of the rod.

In the manufacture of the preform with the apparatus 20, a glass tube is positioned in the lathe 32 with one of its ends in the headstock 33 and with its other end connected by a welded joint (see FIG. 1) to an exhaust tube 97 supported in the tailstock 34. The substrate tube is rotated as the torch assembly 40 is moved in a plurality of passes in a direction from the headstock 33 to the tailstock. During each pass, doped reactants are moved into the tube from its headstock end while spent gases are exhausted at the tailstock end. See U.S. Patent No. 4,278,459.

Following deposition in a preferred embodiment, the passes of the first half of the collapse mode occur. Then, the wall of the tube is pinched together adjacent to its tailstock end. This prevents the entry of moisture and other contaminants into the tube while it is being collapsed. Then the remaining passes of the collapse mode occur in the opposite direction.

During the collapse mode, the heating, at a higher temperature than during deposition, occurs as the torch assembly 40 is moved in a number of passes from headstock to tailstock and in the second half of the collapse mode from tailstock to headstock. At the end of each pass during the second half of the collapse mode, the carriage 36 is returned rapidly to the tailstock for the beginning of another cycle.

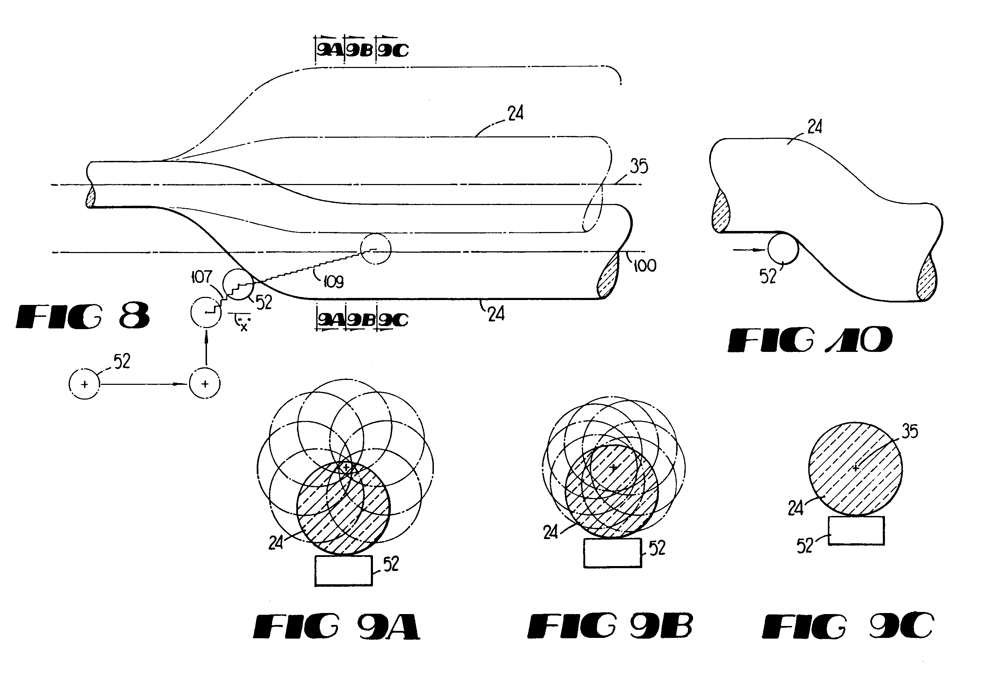

After the substrate tube has been collapsed into a solid preform rod 24 in the collapse mode, the graphite support roller 52 is caused to be moved upwardly to engage the rotating preform rod 24 adjacent to the tailstock 34 (see FIG. 4) by the programmable contoller 90. Its vertical position is a function of the orbit of the cross section of the rod. The roller 52 is pushed partially into the preform rod and displaces softened glass within the moving zone of heat a predeteremined distance "d" (see FIG. 2) behind a centerline 101 of the torch assembly 40. If necessary, the roller 52 is effective to force the rod into alignment with the axis of rotation between the headstock 33 and the tailstock 34. Accordingly, the roller 52 is adapted to urge successive increments of length of the preform rod upwardly until each is disposed substantially concentrically about the axis of rotation between the chucks of the lathe 32. During the straightening and configuring mode, the rotational speed of the preform rod 24 is about 75 rpm.

Parameters which are important to the method of straightening and configuring the preform rod 24 are the carriage speed and the rotational speed of the lathe spindles and the position of the engagement of the contact device 50 with the preform rod 24 relative to the zone of heat. Also important is the temperature of the glass within the zone of heat 41. This is a function of the delivery rates of hydrogen and odygen to the torch assembly 40. In the preferred embodiment, the delivery of hydrogen to the torch assembly 40 is about 130 liters per minute and the delivery of the oxygen is about 65 liters per minute.

The zone of heat 41 is formed in the vicinity of the torch assembly 40 as the torch passes along the rod, but, as will be recalled, it is usually not centered with respect to the centerline 101 of the torch and trails it (see FIG. 2). Up to a point, the distance, d, by which its maximum temperature lags the torch assembly 40 is a function of the velocity of the torch assembly; the greater the velocity, the greater the trailing distance, Inasmuch as the preform rod 24 has a thickness and the torch assembly 40 is moving along the rod, the zone of heat lags the torch assembly.

The contact device 50 must engage the preform rod 24 at a point where the glass is sufficiently soft so that it can be reconfigured. Also, the arrangement of the torch assembly 40 and the contact device must be such that the glass will take a set after its engagement with the roller 52. The point of engagement must not be at a point where subsequently the glass experiences a higher temperature, which would remove the set.

Inasmuch as the location of the zone of heat is difficult to ascertain, the roller 52 may be referenced to the centerline 101 (see FIG. 2) of the torch assembly 40. The distance "d" between centerline of the torch assembly 40 and a center axis 105 of the roller 52 is called the trailing distance and occurs where the increment of length of glass is soft enough to be reconfigured without interfering with interior, less soft layers of the preform. Also, the increment engaged by the roller 52 must be cool enough afterwards to retain that reconfiguration as the graphite roller moves on to the next successive increment along the length of the preform rod. In the preferred embodiment, the water which is flowed over the graphite roller 52 provides ideally a moving cold zone which helps to establish a set in the preform rod which is being straightened progessively. In a preferred embodiment the distance "d" is on the order of 3.5 cm. Should the distance exceed an established range, the glass which is contacted by the roller 52 would be too cool to be successfully reconfigured. Also, the water cooling of the roller 52 is helpful in preventing the roller from adhering to the glass tube and is effective to flush any ablations caused by the flames from the tube.

The manner of engagement and disengagement of the force-applying means, the roller 52, with the preform rod 24 is important to the successful straightening and reconfiguration of the preform rod. As can be seen in FIG. 4 of the drawings, the roller 52 is moved to a first jog stage 107 as the carriage 36 is moving along the lathe bed at a velocity in the range of about 8 to 10 cm/minute. During this period of adjustment, the preform rod 24 in the lathe is being caused to be turned at a rotational velocity of about 75 rpm. Another manner of stating the rotational velocity and one which will be more meaningful to an understanding of the invention is that the preform rod 24 is turned through about 0.5 revolution in 0.4 second.

The first jog stage 107 in FIG. 4 is reached very rapidly by the roller 52. It is caused to be reached by controlling the stepper motor 64 through the programmable controller 90 to move the platform 68 upwardly toward the axis of rotation of the preform rod until it reaches a position which is designated "X" and which is always spaced from the axis of rotation of the preform rod beyond the largest expected orbit of any preform rod. The methods of this invention cause the reconfigured preform rod 24 to have a cross section which in area is substantially equal to the cross section before reconfiguring and which is substantially circular. Also, as stated hereinbefore, the longitudinal axis 100 of the reconfigured preform should be substantially straight with the cross section disposed concentrically about the axis.

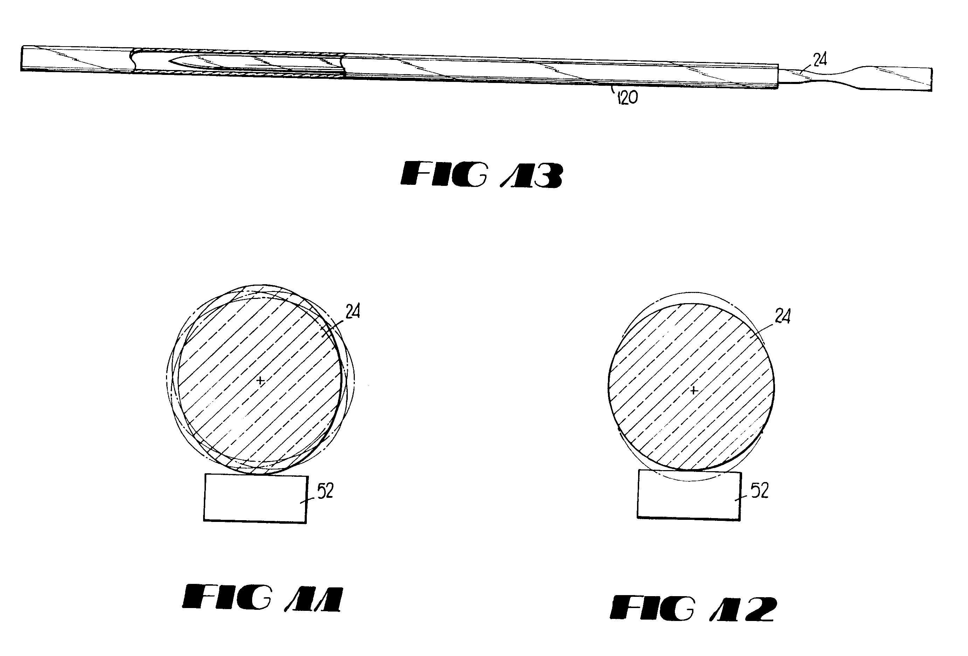

The stepper motor 64 is controlled to move the roller 52 upwardly first in a gross mode which is the first jog stage 107 and then in a fine tuning mode which is a second jog stage designated 109. In a normal fine tuning mode, the stepper motor 64 is controlled to cause the roller to be moved upwardly in steps of about 0.0036 cm, each. However, during the gross mode, a multiplier is used to cause each upward step to be about 0.0108 cm. The gross mode is used to cause the roller 52 to move rapidly from the reference position, "X", into initial engagement with the preform rod 24. Initially, the preform rod 24 occupies the position shown in solid lines in FIG. 4 and orbits about the axis of rotation 35 as shown in FIG. 5. Desirably, the point of initial engagement with the preform rod is just to one side of the pinch-off area (see FIG. 4). As can be seen in FIG. 5, the preform rod 24 has a slight offset which causes it to orbit slightly as the preform rod is turned rotatably.

After the initial engagement of the roller 52 with the preform rod and while the perform rod is orbiting slightly (see FIG. 5), the roller is moved upwardly in 0.0036 cm steps during the fine tuning mode. The incremental steps upwardly are made approximately in 0.1 to 0.2 second intervals.

During the fine tuning mode, there occurs what is referred to as a 0.4 second search. After the initial engagement of the roller 52 with the preform rod, the roller is caused to be moved into the preform rod a distance of about 0.005 to 0.008 cm. As a result, the electrical contact 86 is caused to be moved through the 0.0018 cm gap and engage the first electrical contact 80. When the roller 52 has been engaged with the preform rod 24 continuously for 0.4 second, which corresponds to about one-half of a complete 360 rotation of the preform rod, it is assumed that the cross section is circular at that location and that the axis is substantially straight and in line with the centerline axis of rotatio 35 extending through the headstock 33 and the tailstock 34 of the lathe 32. This engagement has taken place while the carriage 36 is being moved in a direction along the preform rod at the rate of about 9.6 cm/min. Approximately twenty times a second, the controller 90 looks for the satisfaction of the 0.4 second search.

At this time, several alternatives are available. In one, the roller 52 is caused to remain at its present level relative to the axis of rotation 35 and no further adjustments are made. A variation of this would allow the roller 52 to be moved upwardly to reengage the preform rod 24 should disengagement occur as the roller traverses the rod. In the vast majority of times, either results in an acceptable preform rod. However, if for some reason, the point of initial engagement of the roller with the preform rod 24 is further toward the left, as seen in FIG. 4, in the necked-down area, the roller at a fixed spacing relative to the axis of rotation may be moved against an increasingly large mass of glass which could result in damage to the glass.

In the preferred embodiment, there is a constant cycling of the making and breaking of the electrical contacts 80 and 86. After the 0.4 second search has been satisfied, there is a pause for about 5.0 seconds during which time the carriage 36 has advanced about 0.8cm. After 5 seconds have elapsed, the platform 68 is moved downwardly to cause the roller 52 to discontinue its engagement with the preform rod and the 0.4 second search condition is not satisfied. Also, the electrical contact 86 becomes disengaged from the electrical contact 80. Immediately thereafter and as the carriage 36 is being moved in a direction along the preform rod 24, the roller 52 again is moved upwardly to restart another cycle which includes a 0.4 search. In other words, after each 0.4 second engagement of the roller 52 with the preform rod, the stepper motor 64 is controlled to cause the roller to become disengaged from the preform and so that the 0.4 second window condition is not continuously satisfied. When that occurs, the stepper motor 64 is controlled to cause the platform 68 and hence the roller 52 to be moved upwardly as the carriage is advanced along the preform rod until the 0.4 second window condition again is satisfied. As a result, the configuration of the preform rod is monitored and adjusted continuously.

A further refinement may be used. If, in each 5 second window of time during which the roller 52 is held at a constant distance from the axis 35, the roller becomes disengaged from the preform rod because of residual orbiting, for example, then the controller 90 causes the roller again to be moved upwardly to engage the rod.

What is important is that as the roller 52 engages the preform rod, it causes the orbit of the rod to become smaller and smaller iteratively until there is none. In a preferred embodiment, two reconfiguring passes are used. At that time, the preform rod has the sought after geometrical characteristics and the longitudinal axis 100 of the preform rod is substantially coincident with the axis of rotation 35 (see phantom line position in FIGS. 4 and 5).

Viewing now FIGS. 6 and 7, there is shown a substrate rod 24 which has a more pronounced offset. The preform rod 24 in its initial configuration in FIG. 6 is shown in solid lines. Again, the roller 52 is caused to be moved upwardly in a gross mode 107 from a position "X" to engage the rod. However, because of the offset, the fine tuning mode 109 may require substantially more 0.0036 cm upward jogs until the 0.4 second window search is satisfied. This is due to the increased orbiting of the cross section of the rod causing the position of the roller to be farther spaced from the centerline of the spindles than before (see orbiting rod shown in solid in FIGS. 6 and 7).

Also as seen in FIGS. 8 and 9, the preform rod 24 may have an even more severe offset which causes an enlarged orbit. In such an instance, the fine tuning mode 109 requires even more jogs until the 0.4 window is satisfied which denotes that the rod is straightened at that location. Reference may be made to FIGS. 9A, 9B and 9C which show the position of the roller 52 with respect to the preform rod 24 at several positions along the length. As can be seen by comparing FIGS. 9A and 9B, the orbiting has decreased and at the location where FIG. 9C is taken there is none. After reconfiguring, the preform rod 24, as shown by the central phantom line position in FIG. 8 has its longitudinal axis substantially coincident with the axis of rotation 35. In FIG. 10, the position of the roller 52 with respect to an offset portion of the preform rod is shown. As the roller 52 is moved to the right, the roller causes the rod to be straightened and to have a circular cross-sectional configuration.

In FIGS. 11 and 12, there are shown views of an out-of-round preform rod 24 and its reconfiguring with a force-applying means such as the roller 52. As is seen in FIG. 11, the preform rod is somewhat oval-shaped so that as it is rotated, it becomes disengaged with the roller 52 along a lower portion of its periphery. This disengagement causes the controller 90 to cause the platform to be moved upwardly until the roller 52 and preform rod 24 again engage each other.

After is has been caused to be straightened and as is seen in FIG. 13, the reconfigured preform rod 24 is inserted into an overcladding tube 120 whereafter the tube is caused to be collapsed onto the rod. Subsequently, optical fiber is drawn from the overcladded rod in accordance with well known methods.

## Claims

1. A method of configuring and adjusting an elongated glass substrate having a longitudinal substrate axis and end portions, comprising the following steps:
a) supporting the end portions of the substrate (24),
b) rotating the substrate (24) about an axis (35) which extends through the end portions of the substrate (24),
c) heating the substrate (24) in a heating zone which moves along the substrate axis,
d) applying forces by force-applying means (50) to the periphery of the rotating substrate (24) transverse to the substrate axis following the heating zone (41),
characterized by controlling the transverse movement of the force-applying means (50) by control means (90) including sensing means (80, 82, 84, 86) so as
e) to move the force-applying means (50) incrementally toward the axis of rotation (35) and at the same time along same until there is engagement between substrate and force-applying means, and
f) to discontinue the incremental movement automatically while movement along the axis of rotation is continued when the continuous engagement has remained for a predetermined portion of the substrate periphery.

2. The method of claim 1
wherein said substrate is an elongated glass preform rod (24) and wherein the steps e) and f) are followed by a step of
g) disengaging the force-applying means (50) from the preform rod (24) and
h) repeating said steps e), f) and g) over a plurality of specific lengths of the preform rod (24).

3. The method of claim 2
wherein the engagement period of the force-applying means (50) is detected and, if there is sufficient engagement, step g) is carried out
so as to move the force-applying means (50) a predetermined distance away from the axis of rotation (35).

4. The method of claims 2 or 3
wherein a first predetermined time after having carried out step g), another cycle of operation with steps e) and f) is begun with the measurement that, when there is an indication of engagement of the force-applying means (50) and the preform rod (24) for a second predetermined time, the force-applying means is held at a constant distance from the axis of rotation (35) for a third predetermined time.

5. The method according to any of claims 1 through 4
wherein said incremental movement is carried out in a gross mode and in a fine tuning mode, with each increment of travel during the gross mode being substantially greater that during the fine tuning mode.

6. The method of claim 1
wherein said substrate is an elongated glass preform rod (24) and wherein said step f) is carried out along the remaining length of the preform so that the force-applying means (50) is held at a constant spacing from the axis of rotation (35).

7. An apparatus for configuring and adjusting an elongated glass substrate having a longitudinal substrate axis (100) and end portions, comprising the following features:
a) supporting means (33, 34) for holding the ends of said substrate (24) so that the substrate is capable of rotating,
b) rotating means (33) for the substrate,
c) beating means (40) for heating the substrate,
d) force-applying means (50) for engaging the periphery of the substrate (24) and including
d.1) longitudinal moving means (36) for moving the force-applying means (50) along the axis of rotation (35) and
d.2) transverse moving means (60) for moving the force-applying means (50) toward the axis of rotation (35) or away therefrom, characterized in that
e) said transverse moving means (60) is adapted to move said force-applying means (50) incrementally,
and in that
f) sensing means (80, 82, 84, 86) and control means (90) are provided for detecting engagement and disengagement periods of the force-applying means (50) and control the transverse movement of the transverse moving means (60) in incremental steps or stop such movement.

8. The apparatus of claim 7
wherein said transverse moving means (60) is adapted to move said force-applying means (50) rapidly to a position spaced from the axis of rotation (35) a distance which is beyond the largest expected orbit of the substrate, as the substrate is turned, the substrate being any preform rod,
wherein said control means (90) is effective after said force-applying means has been in engagement with the preform rod for a predetermined time for causing said force-applying means to become disengaged from the preform rod and
wherein said control means (90) is effective after said force-applying means has been disengaged from the preform rod for a first predetermined time to cause another cycle of operations to begin.

9. The apparatus of claim 7 or 8,
wherein initially said force-applying means (50) is moved toward the axis of rotation in a gross mode and subsequently in a fine tuning mode with each increment of travel toward the axis of rotation during the gross mode being substantially greater than during the fine tuning mode.

10. The apparatus according to any of claims 7 -9
wherein said control means (90) is responsive to said force applying means (50) being in continuous engagement with a predetermined portion of the periphery of the preform rod (24) to cause said force-applying means to be held at a fixed distance from the axis of rotation (35).

11. The apparatus according to any of claims 7 - 10
wherein said force-applying means (50) comprises a roller (52) extending transversely of the axis of rotation (35) and adapted to engage the preform rod (24);
said longitudinal moving means comprises carriage means (36) for moving said roller (52) and said heating means (40) in a direction along the axis of rotation (35) of the preform rod (24);
said sensing means includes an arm (84) having first and second end portions (85; 92) with said roller (52) being supported at said first end portion (92) of said arm (84),
reciprocally movable means (68, 72, 74, 76) adapted to be moved cyclically toward and away from the axis of rotation (35) of the preform rod (24) for supporting pivotally said arm (84),
first electrical contact means (80) mounted on said reciprocally moveable means (68, 72, 74, 76) adjacent to said second end portion (85) of said arm (84),
second electrical contact means (86) mounted at said second end portion (85) of said arm (84) and spaced from said first contact means (80) which upon a movement in a first direction through a gap between said first and second contact means is caused to engage said first contact means (80),
said second contact means (86) adapted to engage said first contact means (80) when said roller (52) has been moved into suitable engagement with the preform rod (24) as said reciprocally moveable means (68, 72, 74, 76) is being moved toward the axis of rotation (35) of the preform rod (24), and
biasing means (88) for biasing said roller (52) toward the axis of rotation and being effective upon disengagement of a portion of the preform rod from said roller for causing said second contact means (86) to become spaced from said first contact means (80).

12. The apparatus of claim 11
wherein said arm (84) is mounted pivotally about a fulcrum (74) on said reciprocally moveable means (68, 72) with the distance from said second contact means (86) to the fulcrum (74) and from the fulcrum (74) to the end of said first end portion (92) of said arm (84) being such that sufficient engagement of said roller (52) with the preform rod (24) causes the roller (52) to be moved downwardly to cause said second contact means (86) to be moved through the gap and engage said first contact means (80).

13. The apparatus of claim 12
wherein said first and second contact means (80, 86) cooperate to provide a stop for the downward movement of said roller (52) after said roller (52) has engaged the preform rod (24), said apparatus also including means (89) attached to said reciprocally moveable means (68, 72) for limiting the movement of said second end portion (85) of said arm (84) in a direction away from said first contact means (80).

14. The apparatus according to any of claims 7 - 13
wherein said control means (90) is responsive to the lapse of a third predetermined time after said roller has been in engagement with a predetermined portion of the periphery of the preform rod for causing said force-applying means (50) to become disengaged from the preform rod (24) immediately thereafter being moved in another cycle of operation toward the axis of rotation (35) of the preform rod (24).

15. The apparatus according to any of claims 7 - 13
wherein said control means (90) is such that after said roller (52) has been in continuous engagement with the preform rod (24) for a predetermined portion of the periphery of the preform rod, said control means (90) causes said roller (52) to remain spaced a fixed distance from the axis of rotation (35) as the roller (52) is moved along the length of the preform rod (24).

## Patentansprüche

1. Verfahren zur Formbildung und Einstellung eines länglichen Glassubstrats mit einer Längsachse und Endteilen, mit folgenden Schritten:
a) die Endteile des Substrats (24) werden gestützt,
b) das Substrat (24) wird um eine Achse (35) gedreht, die sich durch die Endteile des Substrats (24) erstreckt,
c) das Substrat (24) wird in einer Heizzone erwärmt, die sich entlang der Substratachse bewegt,
d) über eine Kraftanlageeinrichtung (50) werden Kräfte auf den Rand des sich drehenden Substrats (24) quer zur Substratachse nachfolgend der Heizzone (41) aufgebracht,
**dadurch gekennzeichnet,** daß die Querbewegung der Kraftanlageeinrichtung (50) mittels einer Abtasteinrichtung (80, 82, 84, 86) aufweisenden Steuereinrichtung (90) gesteuert wird, so daß
e) die Kraftanlageeinrichtung (50) in kleinen Schritten zur Drehachse (35) und gleichzeitig entlang dieser bewegt wird, bis es zum Eingriff zwischen dem Substrat und der Kraftanlageeinrichtung kommt, und
f) daß die schrittweise Bewegung automatisch beendigt wird, während die Bewegung entlang der Drehachse fortgeführt wird, wenn der andauernde Eingriff für ein vorbestimmtes Stück des Substratrandes angedauert hat.

2. Verfahren nach Anspruch 1,
dadurch gekennzeichnet, daß das Substrat eine längliche Glasvorformstange (24) ist und daß den Schritten e) und f) folgender Schritt nachfolgt:
g) die Kraftanlageeinrichtung (50) wird von der Vorformstange (24) freigemacht und
h) die Schritte e), f) und g) werden über eine Mehrzahl von speziellen Längen der Vorformstange (24) wiederholt.

3. Verfahren nach Anspruch 2,
dadurch gekennzeichnet, daß die Eingriffsperiode der Kraftanlageeinrichtung (50) festgestellt wird und wenn genügend Eingriff vorhanden ist, der Schritt g) ausgeführt wird, so daß die Kraftanlageeinrichtung (50) ein vorbestimmtes Stück von der Drehachse (35) wegbewegt wird.

4. Verfahren nach Anspruch 2 oder 3,
dadurch gekennzeichnet, daß nach einer ersten vorbestimmten Zeit nach Ausführung des Schrittes g) ein weiterer Zyklus der Einwirkung mit Schritten e) und f) mit der Maßgabe begonnen wird, daß, wenn es ein Anzeichen des Eingriffs der Kraftanlageeinrichtung (50) und der Vorformstange (24) für eine zweite vorbestimmte Zeit gibt, die Kraftanlageeinrichtung auf eine konstante Entfernung der Drehachse (35) für eine dritte vorbestimmte Zeit gehalten wird.

5. Verfahren nach einem der Ansprüche 1 bis 4,
dadurch gekennzeichnet, daß die schrittweise Bewegung in einer groben Betriebsart und in einer Feinabstimmungsbetriebsart ausgeführt wird, wobei jeder Schritt des zurückgelegten Weges während der groben Betriebsweise im wesentlichen größer als während der Feinabstimmungsbetriebsweise ist.

6. Verfahren nach Anspruch 1,
dadurch gekennzeichnet, daß das Substrat eine längliche Glasvorformstange (24) ist und daß der Schritt f) entlang der verbleibenden Länge der Vorform ausgeführt wird, so daß die Kraftanlageeinrichtung (50) in einem konstanten Abstand von der Drehachse (35) gehalten wird.

7. Verfahren der Formbildung und Einstellung eines länglichen Glassubstrats mit einer Längsachse (100) und Endteilen, mit folgenden Merkmalen:
a) eine Stützeinrichtung (33, 34) zum Halten der Enden des Substrats (24), so daß das Substrat gedreht werden kann,
b) eine Dreheinrichtung (33) für das Substrat,
c) eine Heizeinrichtung (40) zum Erhitzen des Substrats,
d) eine Kraftanlageeinrichtung (50) zum Eingriff an der Peripherie des Substrats (24), welche umfaßt
d1) eine Längsverschiebungseinrichtung (36) zur Verschiebung der Kraftanlageeinrichtung (50) entlang der Drehachse (35) und
d2) eine Querverschiebungseinrichtung (60) zur Verschiebung der Kraftanlageeinrichtung (50) zur Drehachse (35) hin oder weg von dieser,
dadurch gekennzeichnet, daß
e) die Querverschiebungseinrichtung (60) dazu eingerichtet ist, die Kraftanlageeinrichtung (50) in kleinen Schritten zu verschieben, und daß
f) die Abtasteinrichtung (80, 82, 84, 86) und die Steuereinrichtung (90) zur Feststellung der Eingriffs- und Außereingriffs-Perioden der Kraftanlageeinrichtung (50) und zur Steuerung der Querbewegung der Querverschiebungseinrichtung (60) in inkrementalen Schritten oder zum Anhalten dieser Verschiebung vorgesehen sind.

8. Gerät nach Anspruch 7,
dadurch gekennzeichnet, daß die Querverschiebungseinrichtung (60) zur raschen Verschiebung der Kraftanlageeinrichtung (50) in eine Stellung vorgesehen ist, die von der Drehachse (35) um ein größeres Stück entfernt ist, als die größte zu erwartende Umlaufbahn des Substrats, wenn das Substrat gedreht wird, wobei das Substrat eine beliebige Vorformstange sein kann, daß die Steuereinrichtung (90) wirksam wird, nachdem die Kraftanlageeinrichtung in Eingriff mit der Vorformstange für eine vorbestimmte Zeit gekommen ist, um die Kraftanlageeinrichtung von der Vorform außer Eingriff zu nehmen und daß die Steuereinrichtung (90) wirksam wird, nachdem die Kraftanlageeinrichtung von der Vorformstange fur eine vorbestimmte Zeit außer Eingriff gebracht worden ist, um einen weiteren Zyklus der Einwirkung zu beginnen.

9. Gerät nach Anspruch 7 oder 8,
dadurch gekennzeichnet, daß die Kraftanlageeinrichtung (50) zunächst zur Drehachse in einer Grobbetriebsweise und nachfolgend in einer Feinabstimmungsbetriebsweise verschoben wird, wobei jeder Schritt des zurückgelegten Wegs zur Drehachse hin während der Grobbetriebsweise im wesentlichen größer als während der Feinabstimmungsbetriebweise ist.

10. Gerät nach einem der Ansprüche 7 bis 9,
dadurch gekennzeichnet, daß die Steuereinrichtung (90) auf die Kraftanlageeinrichtung (50) anspricht, welche in dauerndem Eingriff mit einem vorbestimmten Teil des Umfangs der Vorformstange (24) steht, um die Kraftanlageeinrichtung in einem vorbestimmten Abstand der Drehachse (35) zu halten.

11. Gerät nach einem der Ansprüche 7 bis 10,
dadurch gekennzeichnet, daß die Kraftanlageeinrichtung (50) eine Rolle (52) aufweist, die sich quer zur Drehachse (35) erstreckt und zum Eingriff an der Vorformstange (24) eingerichtet ist,
daß die Längsverschiebungseinrichtung eine Schlitteneinrichtung (36) zur Verschiebung der Rolle (52) und der Heizeinrichtung (40) in Richtung entlang der Drehachse (35) der Vorformstange (24) aufweist,
daß die Abtasteinrichtung einen Arm (24) mit ersten und zweiten Endteilen (85, 92) aufweist, wobei die Rolle (52) am ersten Endteil (92) des Arms (84) sitzt,
daß eine hin- und hergehende Einrichtung (68, 72, 74, 76) zur zyklischen Bewegung zu und von der Drehachse (35) der Vorformstange (24) und zur schwenkbaren Stützung des Arms (84) eingerichtet ist,
daß eine elektrische Kontakteinrichtung (80) an der hin- und hergehenden Einrichtung (68, 72, 74, 76) benachbart dem zweiten Ende (85) des Arms (84) montiert ist,
daß eine zweite elektrische Kontakteinrichtung (86) an dem zweiten Endteil (85) des Arms (84) montiert ist und einen Abstand von der ersten Kontakteinrichtung (80) einnimmt, ferner auf eine Bewegung in einer ersten Richtung um einen Spalt zwischen der ersten und der zweiten Kontakteinrichtung zur Berührung mit der ersten Kontakteinrichtung (80) gebracht wird,
daß die zweite Kontakteinrichtung (86) zur Anlage an der ersten Kontakteinrichtung (80) ausgebildet ist, wenn die Rolle (52) in geeigneter Anlage an der Vorformstange (24) bewegt worden ist, wenn die hin- und hergehende Einrichtung (68, 72, 74, 76) zu der Drehachse (35) der Vorformstange (24) bewegt worden ist, und
daß eine Vorspannungseinrichtung (88) zur Vorspannung der Rolle (52) zur Drehachse vorgesehen und wirksam wird, wenn ein Teil der Vorformstange von der Rolle außer Eingriff kommt, um die zweite Kontakteinrichtung (86) im Abstand von der ersten Kontakteinrichtung (80) zu bringen.

12. Gerät nach Anspruch 11,
dadurch gekennzeichnet, daß der Arm (84) schwenkbar um einen Drehpunkt (74) an der hin- und hergehenden Einrichtung (68, 72) montiert ist, wobei der Abstand von der zweiten Kontakteinrichtung (86) zu dem Drehpunkt (74) und von dem Drehpunkt (74) zum Ende des ersten Endteils (92) des Arms (84) so ist, daß genügender Eingriff der Rolle (52) an der Vorformstange (24) die Rolle (52) dazu bringt, sich nach außen zu bewegen, um die zweite Kontakteinrichtung (86) um die Spaltlänge zu bewegen und an der ersten Kontakteinrichtung (80) anzuliegen.

13. Gerät nach Anspruch 12,
dadurch gekennzeichnet, daß die erste und die zweite Kontakteinrichtung (80, 86) im Sinne eines Anschlags für die Abwärtsbewegung der Rolle (52) zusammenarbeiten, nachdem die Rolle (52) in Eingriff mit der Vorformstange (24) gekommen ist, und daß das Gerät auch eine Einrichtung (89) umfaßt, die an der hin- und hergehenden Einrichtung (68, 72) befestigt ist, um die Bewegung des zweiten Endteils (85) des Arms (84) in Richtung weg von der ersten Kontakteinrichtung (80) zu begrenzen.

14. Gerät nach einem der Ansprüche 7 bis 13,
dadurch gekennzeichnet, daß die Steuereinrichtung (90) auf den Ablauf einer dritten vorbestimmten Zeit anspricht, nachdem die Rolle in Eingriff mit einem vorbestimmten Teil des Umfangs der Vorformstange gekommen ist, um die Kraftanlageeinrichtung (50) außer Eingriff von der Vorformstange (24) zu bringen, wonach diese unmittelbar in einem weiteren Betriebszyklus zur Drehachse (35) der Vorformstange (24) bewegt wird.

15. Gerät nach einem der Ansprüche 7 bis 13,
dadurch gekennzeichnet, daß die Steuereinrichtung (90) derart ausgebildet ist, daß, nachdem die Rolle (52) in kontinuierlichen Eingriff mit der Vorformstange (24) für einen vorbestimmten Teil des Umfangs der Vorformstange gewesen ist, die Steuereinrichtung (90) die Rolle (52) dazu bringt in einem vorbestimmten Abstand von der Drehachse (35) zu bleiben, wenn die Rolle (52) entlang der Länge der Vorformstange (24) bewegt wird.

## Revendications

1. Un procédé pour définir la configuration d'un substrat en verre allongé ayant un axe de substrat longitudinal et des parties d'extrémités, et pour ajuster ce substrat, comprenant les étapes suivantes :
a) on supporte les parties d'extrémités du substrat (24),
b) on fait tourner le substrat (24) autour d'un axe (35) qui traverse les parties d'extrémités du substrat (24),
c) on chauffe le substrat (24) dans une zone de chauffage qui se déplace le long ce l'axe du substrat,
d) on applique des forces, à l'aide de moyens d'application de forces (50), à la périphérie du substrat (24) en rotation, transversalement à l'axe du substrat, en suivant la zone de chauffage (41),
caractérisé en ce qu'on commande la mouvement transversal des moyens d'application de forces (50) avec des moyens de commande (90) comprenant des moyens de détection (80, 82, 84, 86), de façon à
e) déplacer les moyens d'application de forces (50) de manière incrémentielle en direction de l'axe de rotation (35), et en même temps le long de cet axe, jusqu'à ce qu'il y ait contact entre le substrat et les moyens d'application de forces, et
f) arrêter automatiquement le mouvement incrémentiel pendant que le mouvement le long de l'axe de rotation est poursuivi, lorsque le contact continu est resté établi sur une partie prédéterminée de la périphérie du substrat.

2. Le procédé de la revendication 1
dans lequel le substrat est un barreau de préforme en verre (24) allongé et dans lequel les étapes e) et f) sont suivies par l'étape suivante :
g) on recule les moyens d'application de forces (50) vis-à-vis du barreau de préforme (24), et
h) on répète les étapes e), f) et g) sur un ensemble de longueurs spécifiques du barreau de préforme (24).

3. Le procédé de la revendication 2
dans lequel on détecte la période de contact des moyens d'application de forces (50), et s'il y a un contact suffisant, on accomplit l'étape g)
de façon à déplacer les moyens d'application de forces (50) sur une distance prédéterminée dans la direction qui les éloigne de l'axe de rotation (35).

4. Le procédé des revendications 2 ou 3
dans lequel au bout d'une première durée prédéterminée après avoir accompli l'étape g), on commence un autre cycle de fonctionnement avec les étapes e) et f), en prenant la mesure suivante : lorsqu'il y a une indication de contact des moyens d'application de forces (50) et du barreau de préforme (24) pendant une seconde durée prédéterminée, on maintient les moyens d'application de forces à une distance constante de l'axe de rotation (35) pendant une troisième durée prédéterminée.

5. Le procédé selon l'une quelconque des revendications 1 à 4
dans lequel le mouvement incrémentiel est accompli dans un mode grossier et dans un mode d'ajustement fin, chaque incrément de déplacement pendant le mode grossier étant notablement plus grand que pendant le mode d'ajustement fin.

6. Le procédé de la revendication 1
dans lequel le substrat est un barreau de préforme de verre (24) allongé, et dans lequel l'étape f) est accomplie le long de la longueur restante de la préforme d'une manière telle que les moyens d'application de forces (50) soient maintenus à une distance constante de l'axe de rotation (35).

7. Un appareil pour définir la configuration d'un substrat en verre allongé ayant un axe de substrat longitudinal (100) et des parties d'extrémités, et pour ajuster ce substrat, comprenant les éléments suivants :
a) des moyens de support (33, 34) destinés à maintenir les extrémités du substrat (24), de façon que le substrat puisse tourner,
b) des moyens d'entraînement en rotation (33) pour le substrat,
c) des moyens de chauffage (40) pour chauffer le substrat,
d) des moyens d'application de forces (50) destinés à venir en contact avec la périphérie du substrat (24) et comprenant
d.1) des moyens de déplacement longitudinal (36) destinés à déplacer les moyens d'application de forces (50) le long de l'axe de rotation (35), et
d.2) des moyens de déplacement transversal (60) destinés à déplacer les moyens d'application de forces (50) vers l'axe de rotation (35) ou dans une direction opposée,
caractérisé en ce que
e) les moyens de déplacement transversal (60) sont conçus pour déplacer les moyens d'application de forces (50) de manière incrémentielle,
et en ce que
f) des moyens de détection (80, 82, 84, 86) et des moyens de commande (90) sont incorporés pour détecter des périodes de contact et de non-contact des moyens d'application de forces (50), et pour commander le mouvement transversal des moyens de déplacement transversal (60) par pas incrémentiels, ou pour arrêter ce mouvement.

8. L'appareil de la revendication 7
dans lequel les moyens de déplacement transversal (60) sont conçus pour déplacer rapidement les moyens d'application de forces (50) jusqu'à une position espacée par rapport à l'axe de rotation (35) d'une distance qui est supérieure à la plus grande orbite prévue du substrat, lorsque le substrat est mis en rotation, le substrat consistant en un barreau de préforme quelconque,
dans lequel après que les moyens d'application de forces ont été en contact avec le barreau de préforme pendant une durée prédéterminée, les moyens de commande (90) agissent sur les moyens d'application de forces de façon à les dégager du barreau de préforme, et
dans lequel après que les moyens d'application de forces ont été dégagés du barreau de préforme pendant une première durée prédéterminée, les moyens de commande (90) font commencer un autre cycle d'opérations.

9. L'appareil de la revendication 7 ou 8,
dans lequel les moyens d'application de forces (50) sont déplacés initialement vers l'axe de rotation dans un mode grossier, et ils sont ensuite déplacés dans un mode d'ajustement fin, chaque incrément de déplacement vers l'axe de rotation pendant le mode grossier étant notablement plus grand que pendant le mode d'ajustement fin.

10. L'appareil selon l'une quelconque des revendications 7-9
dans lequel les moyens de commande (90) réagissent au fait que les moyens d'application de forces (50) sont en contact continu avec une partie prédéterminée de la périphérie du barreau de préforme (24), en maintenant ces moyens d'application de forces à une distance fixée par rapport à l'axe de rotation (35).

11. L'appareil selon l'une quelconque des revendications 7-10
dans lequel les moyens d'application de forces (50) comprennent un rouleau (52) qui s'étend transversalement à l'axe de rotation (35) et qui est conçu pour venir en contact avec le barreau de préforme (24);
les moyens de déplacement longitudinal comprennent une structure de chariot (36) qui est destinée à déplacer le rouleau (52) et les moyens de chauffage (40) dans une direction parallèle à l'axe de rotation (35) du barreau de préforme (24);
les moyens de détection comprennent un bras (84) ayant des première et seconde parties d'extrémités (85; 92), avec le rouleau (52) supporté à la première partie d'extrémité (92) de ce bras (84),
des moyens pouvant être déplacés avec un mouvement alternatif (68, 72, 74, 76) qui sont adaptés pour être déplacés de façon cyclique vers l'axe de rotation (35) du barreau de préforme (24) et dans la direction opposée, destinés à supporter le bras (84) de façon pivotante,
des premiers moyens de contact électrique (80) montés sur les moyens pouvant être déplacés avec un mouvement alternatif (68, 72, 74, 76), en position adjacente à la seconde partie d'extrémité (85) du bras (84),
des seconds moyens de contact électrique (86) montés sur la seconde partie d'extrémité (85) du bras (84), et espacés par rapport aux premiers moyens de contact (80), qui sous l'effet d'un mouvement dans une première direction à travers un intervalle entre les premiers et seconds moyens de contact, viennent en contact avec les premiers moyens de contact (80), ces seconds moyens de contact (86) étant conçus pour venir en contact avec les premiers moyens de contact (80) lorsque le rouleau (52) a été déplacé pour venir en contact de façon appropriée avec le barreau de préforme (24), pendant que les moyens pouvant être déplacés avec un mouvement alternatif (68, 72, 74, 76) sont déplacés vers l'axe de rotation (35) du barreau de préforme (24), et
des moyens de sollicitation (88) destinés à solliciter le rouleau (52) en direction de l'axe de rotation, et qui font en sorte que les seconds moyens de contact (86) prennent une position espacée par rapport aux premiers moyens de contact (80) lorsqu'une partie du barreau de préforme cesse d'être en contact avec le rouleau.

12. L'appareil de la revendication 11
dans lequel le bras (84) est monté de façon à pivoter autour d'une structure de point d'appui (74) sur les moyens pouvant être déplacés avec un mouvement alternatif (68, 72), la distance à partir des seconds moyens de contact (86) jusqu'à la structure de point d'appui (74) et à partir de la structure de point d'appui (74) jusqu'à l'extrémité de la première partie d'extrémité (92) du bras (84), étant telle qu'un contact suffisant du rouleau (52) avec le barreau de préforme (24) déplace le rouleau (52) vers le bas, pour faire en sorte que les seconds moyens de contact (86) se déplacent sur l'intervalle précité et viennent en contact avec les premiers moyens de contact (80).

13. L'appareil de la revendication 12
dans lequel les premiers et seconds moyens de contact (80, 86) coopèrent de façon à former une butée pour le mouvement descendant du rouleau (52) après que ce rouleau (52) est venu en contact avec le barreau de préforme (24), cet appareil comprenant également des moyens (89) qui sont fixés aux moyens pouvant être déplacés avec un mouvement alternatif (68, 72), pour limiter le mouvement de la seconde partie d'extrémité (85) du bras (84), dans une direction l'éloignant des premiers moyens de contact (80).

14. L'appareil selon l'une quelconque des revendications 7-13
dans lequel les moyens de commande (90) réagissent à l'écoulement d'une troisième durée prédéterminée après que le rouleau a été en contact avec une partie prédéterminée de la périphérie du barreau de préforme, en commandant le recul des moyens d'application de forces (50) par rapport au barreau de préforme (24), et en les déplaçant ensuite immédiatement vers l'axe de rotation (35) du barreau de préforme (24), dans un autre cycle de fonctionnement.

15. L'appareil selon l'une quelconque des revendications 7-13
dans lequel les moyens de commande (90) sont tels qu'après que le rouleau (52) a été en contact continu avec le barreau de préforme (24) sur une partie prédéterminée de la périphérie du barreau de préforme, ces moyens de commande (90) font en sorte que le rouleau (52) reste espacé d'une distance fixée par rapport à l'axe de rotation (35), pendant que le rouleau (52) est déplacé sur la longueur du barreau de préforme (24).
